# EUROPÄISCHE PATENTSCHRIFT

(11) **EP 0 929 880 B1**
(45) Veröffentlichungstag und Bekanntmachung des Hinweises auf die Patenterteilung: **24.01.2001**
(21) Anmeldenummer: 97941809.2
(22) Anmeldetag: 22.08.1997
(51) Int. Cl.: G07F 7/10, G07F 7/08, H04M 17/00

(54) **BARGELDLOSE BEZAHLUNG MIT EINEM MOBILFUNKGERÄT**
CASHLESS PAYMENT BY MEANS OF A MOBILE RADIO APPARATUS
PAIEMENT SANS ESPECES AVEC UN APPAREIL RADIO MOBILE

(30) Priorität: 13.09.1996 DE 19637434
(43) Veröffentlichungstag der Anmeldung: 21.07.1999
(73) Patentinhaber: SIEMENS AKTIENGESELLSCHAFT, 80333 München (DE)
(72) Erfinder: VON BROCKDORFF, Christian-Friedrich, D-82057 Icking (DE)
(86) Internationale Anmeldenummer: DE9701824
(87) Internationale Veröffentlichungsnummer: WO9811519

(56) Entgegenhaltungen:
- EP-A- 0 264 023
- EP-A- 0 708 547
- WO-A-94/11849
- WO-A-96/13814
- WO-A-96/25828
- US-A- 5 208 446
- COMBANI RE C: "NOUVELLES POSSIBILIT S DE PAIEMENT" REE: REVUE G N RALE DE L' LECTRICIT ET DE L' LECTRONIQUE, Nr. 4, 1.Oktober 1995, Seiten 57-65, XP000533330

## Beschreibung

Die Erfindung betrifft ein Verfahren zur bargeldlosen Bezahlung.

Die bargeldlose oder papierlose Bezahlung von Geldbeträgen erfolgt heute beispielsweise in Geschäften unter Verwendung einer Scheckkarte und Eingabe einer persönlichen Identifizierungsnummer. An Stelle der Eingabe der persönlichen Identifizierungsnummer kann auch nach dem elektronischen Lesen der Kartendaten eine Abbuchung nach dem Unterschreiben eines entsprechenden Beleges durchgeführt werden. Die Eingabe der persönlichen Identifizierungsnummer bzw. die Unterschrift dienen zur Authentifikation des Kunden und gleichzeitig zur Bestätigung des akzeptierten Geldbetrages durch den Kunden.

Unter Geschäft sollen im folgenden alle Stellen bzw. Terminals verstanden werden, an denen ein Kunde eine Ware, eine Dienstleistung oder ähnliches bezahlen kann. Das Geschäft ist für die Abwicklung der Bezahlung mit einem Geschäftsendgerät ausgestattet, beispielsweise einem Kassenterminal mit Anschluß an eine Kreditkartenzentrale zur Bonitätsprüfung des Kunden.

Um verschiedene Dienste miteinander zu kombinieren, können multifunktionale Chipkarten eingeführt werden. So können zum Beispiel mit der Barkley card Bankgeschäfte ausgeführt und ein Mobilfunkgerät benutzt werden. Nachteilig ist hierbei, daß die Karte für die Bankgeschäfte aus dem Mobilfunkgerät herausgenommen werden muß. Dies ist relativ umständlich, und während dieser Zeitspanne ist der Kunde vom Mobilfunknetz her nicht erreichbar. Weiter werden in Mobilfunkgeräten teilweise sog. Minikarten eingesetzt, die für einen händischen Gebrauch ziemlich ungeeignet sind.

Über Mobilfunksysteme bzw. Mobilfunknetze, beispielsweise nach dem GSM-Standard, können digitale Daten ausgetauscht werden. Diese digitalen Daten können digitalisierte Sprachsignale, Daten zur Fax-Kommunikation oder ganz allgemein Daten für stationäre oder mobile Datenverarbeitungssysteme, wie Personal Computer oder Notebooks sein.

Die Druckschrift WO-A-94/11849 offenbart ein Verfahren zur bargeldlosen Bezahlung, bei dem
- eine multifunktionale Chipkarte (2, mit Bezahlfunktion und SIM-Funktion, siehe zB Seite 9, Zeilen 19 bis 21) in ein Endgerät (1) mit drahtloser Anbindung an ein Mobilfunknetz (6) eingelegt wird (siehe Seite 7, letzter Absatz der Entgegenhaltung),
- nach Eingabe eines Identifizierungsmerkmals am Endgerät das Endgerät bei dem Mobilfunknetz angemeldet und in dieses eingebucht wird (Seite 8, Zeilen 7 bis 10),
- eine Verbindung vom Endgerät (1) zu einem Geschäfts-Endgerät (transmitter's payment system) über das Mobilfunknetz aufgebaut wird (Seite 8, Zeilen 11 bis 14),
- eine Bonitätsprüfung mit einer auf der Chipkarte gespeicherten Kartennummer durchgeführt wird (Seite 8, Zeilen 16/17 und Zeilen 23 bis 26), und
- ein zu zahlender Geldbetrag nach einer Bestätigung am Endgerät (Seite 8, Zeile 16) bei einem positiven Ergebnis der Bonitätsprüfung zur Bezahlung freigegeben wird (Seite 8, Zeilen 16 bis 18).
Da die SIM-Chipkarte Bezahlvorgänge erlaubt, braucht sie während Bezahlvorgängen nicht aus dem Mobilfunkgerät herausgenommen zu werden.

Ferner ist die Eingabe eines persönlichen Identifizierungsmerkmals bei Mobilfunkendgeräten üblich, siehe zB die PIN-Eingabe, die in der WO-A-94/11849 in ähnlichem Zusammenhang (Seite 7, Absatz 2) beschrieben ist; oder WO-A-96/25828, Seite 10, Zeile 20 (personal identification number); oder EP-A-0 708 547, Spalte 3, Zeilen 50 bis 55 (personal identification code, voice authentication).

In den im Stand der Technik beschriebenen Mobilfunk-Bezahlsituationen gibt der *Zahlungspflichtige* den zu zahlenden Geldbetrag ein, ohne daß das Geschäfts-Endgerät am Zahlungsvorgang beteiligt ist (siehe zB WO-A-94/11849, Seite 8, Zeilen 13 bis 16; WO-A-96/13814, Seite 5, Absätze 2 und 3, denen zufolge das Geschäfts-Endgerät lediglich eine Mitteilung über die erfolgte Zahlung erhält), oder der Zahlungsempfänger veranlaßt die Zahlung, ohne daß das (Verbraucher-) Endgerät am Zahlungsvorgang beteiligt ist (siehe zB WO-A-96/13814, Seite 6, Absätze 2 und 3), oder es erfolgt eine Kontobewegung zwischen den beiden Endgeräten nicht über die Mobilfunkverbindung, sondern über eine unmittelbare Nahverkehrsverbindung, etwa über eine Infrarotschnittstelle (siehe zB WO-A-96/25828, Seite 16, Zeile 14 bis Seite 17, Zeile 11).

Der Erfindung liegt die Aufgabe zu Grunde, ein Verfahren der eingangs genannten Art unter Verwendung einer multifunktionalen Chipkarte zu vereinfachen.

Diese Aufgabe wird erfindungsgemäß durch die im Patentanspruch 1 angegebenen Merkmale gelöst.

Für den Kunden ergeben sich durch das erfindungsgemäße Verfahren folgende Vorteile. Eine Extra-Karte, Scheck- oder Kreditkarte, zur Bezahlung entfällt. Desgleichen entfällt eine persönliche Identifizierungsnummer für diese Extra-Karte.

Weiter muß der Hersteller der Mobilfunkgeräte keine Rücksicht auf das Format der multifunktionalen Chipkarte nehmen, da diese Karte nicht aus dem Gerät herausgenommen werden muß.

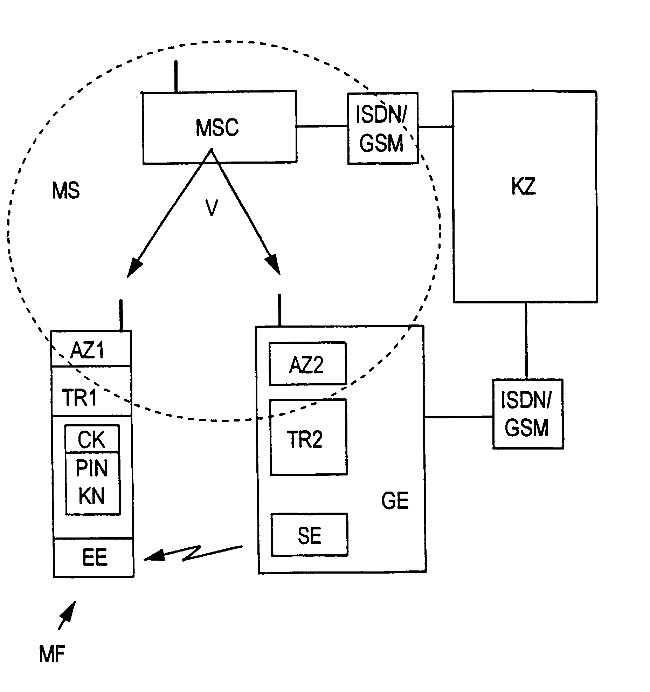

Im folgenden wird die Erfindung anhand eines in der Zeichnung dargestellten Ausführungsbeispieles beschrieben. In der einzigen FIG sind die für das Verständnis der Erfindung notwendigen Einzelheiten dargestellt.

Ein Mobilfunksystem MS weist eine Vermittlungszentrale MSC (mobile switching center) auf. Die Zellenstruktur des Mobilfunksystems MS und die zugehörigen Basisstationen sind für die Erfindung von untergeordneter Bedeutung und in der FIG nicht dargestellt. Das Mobilfunksystem MS kann nach dem GSM- oder DECT-Standard, sowie nach einem anderen nationalen oder internationalen Funksystem ausgebildet sein.

Der bargeldlose Zahlungsverkehr wird mit einem Geschäftsendgerät GE abgewickelt, das beispielsweise in einem Geschäft, in einer Bank oder freistehend aufgestellt ist. Das Geschäftsendgerät GE kann ein Kartenautomat oder ein Bankterminal sein. Das Geschäftsendgerät GE weist eine Anzeigeeinrichtung AZ2 und einen Tastaturblock TR2 auf.

Zur Durchführung des erfindungsgemäßen Verfahrens besitzt ein Kunde ein Mobilfunkgerät MF. Dieses Mobilfunkgerät MF weist in an sich bekannter Weise eine Anzeigeeinrichtung AZ1 und einen Tastaturblock TR1 auf. Auf einer, in das Mobilfunkgerät MF eingelegten multifunktionalen Chipkarte CK sind eine persönliche Identifizierungsnummer PIN und eine Kartennummer KN eingespeichert. Die Identifizierungsnummer PIN muß vom Benutzer des Mobilfunkgerätes MF zur Anmeldung beim Mobilfunksystem MS eingegeben werden. Nach der Anmeldung, d.h. bei Eingabe der korrekten Identifizierungsnummer PIN, wird das Mobilfunkgerät MF in das Mobilfunksystem MS eingebucht. Die Überprüfung der Identifizierungsnummer PIN erfolgt im allgemeinen im Mobilfunkgerät MF selbst.

Vom Mobilfunkgerät MF wird eine Verbindung V über die Vermittlungszentrale MSC zum Geschäftsendgerät GE aufgebaut. Hierzu gibt der Kunde beispielsweise die am Geschäftsendgerät GE angegebene Telefonnummer über den Tastaturblock TR1 in sein Mobilfunkgerät MF ein. Diese Verbindung V ist ein erster Schritt für die Abwicklung des bargeldlosen Zahlungsverkehrs.

Die Vermittlungszentrale MSC und/oder das Geschäftsendgerät GE sind mit einer Kartenzentrale KZ verbunden. Die Kartenzentrale KZ dient zur Bonitätsprüfung des Kunden bzw. der von ihm verwendeten Chipkarte CK. Die Verbindung zur Kartenzentrale KZ kann über eine ISDN-Telefonleitung oder über ein GSM-Mobilfunknetz realisiert sein.

Als nächster Schritt wird anhand der auf der Chipkarte CK gespeicherten Kartennummer KN in der Kartenzentrale KZ eine Bonitätsprüfung des Kunden durchgeführt. Die Kartennummer KN kann von der Vermittlungszentrale MSC zur Kartenzentrale KZ übertragen werden, wobei anschließend das Ergebnis der Bonitätsprüfung an das Geschäftsendgerät GE automatisch über die Verbindung V übertragen wird. Die Kartennummer KN kann auch vom Geschäftsendgerät GE zur Kartenzentrale übertragen werden, wobei dann das Ergebnis der Bonitätsprüfung von der Kartenzentrale KZ direkt zum Geschäftsendgerät GE übertragen wird.

Am Geschäftsendgerät GE wird der zu zahlende Geldbetrag über den Tastaturblock TR2 eingegeben. Dieser Geldbetrag wird über die Verbindung V zum Mobilfunkgerät MF übertragen, und dort auf der Anzeigeeinrichtung AZ1 dargestellt. Der Geldbetrag kann auch in üblicher Weise zu einer Reservierung in der Kartenzentrale KZ führen.

Nach erfolgter Bonitätsprüfung mit einem positiven Ergebnis wird der Kunde aufgefordert, den Geldbetrag zu bestätigen. In einem weiteren Schritt zur Abwicklung des bargeldlosen Zahlungsverkehrs gibt der Kunde an seinem Mobilfunkgerät MF durch Betätigen einer oder mehrerer Tasten des Tastaturblocks TR1 eine Bestätigung ein, die über die Verbindung V zum Geschäftsendgerät GE übertragen wird. Nach dieser Bestätigung des Geldbetrages, und gegebenenfalls der Abbuchung in der Kartenzentrale KZ, ist der bargeldlose Zahlungsverkehr zwischen dem Mobilfunkgerät MF des Kunden und dem Geschäftsendgerät GE abgewickelt.

Bei einer Variante der Erfindung wird die Verbindung V, beispielsweise unter Verwendung eines Mobilfunknetzes nach dem DECT-Standard, über das Geschäftsendgerät GE zur Kartenzentrale KZ aufgebaut.

Bei einer Ausgestaltung der Erfindung weist das Mobilfunkgerät MF eine Empfangseinrichtung EE und das Geschäftsendgerät GE eine Sendeeinrichtung SE auf. Die Empfangs- bzw. Sendeeinrichtung EE, SE sind vorzugsweise drahtlos ausgebildet. Diese drahtlose Verbindung zwischen dem Geschäftsendgerät GE und dem Mobilfunkgerät MF kann beispielsweise durch eine Infrarot-Übertragungsstrecke und entsprechende Sende- und Empfangsmodule realisiert sein.

Von der Sendeeinrichtung SE kann die Telefonnummer des Geschäftsendgerätes GE ausgestrahlt werden. Der Kunde muß dann am Mobilfunkgerät MF nicht diese Telefonnummer eingeben, sondern diese empfangene Telefonnummer kann in vereinfachter Weise, beispielsweise durch eine bloße Bestätigung, zum Aufbau der Verbindung V im Mobilfunksystem MS verwendet werden.

Mit der persönlichen Identifizierungsnummer PIN wird eine Authentifizierung des Kunden gegenüber der Chipkarte durchgeführt. Mit der Bonitätsprüfung über die Kartennummer KN wird die Kreditwürdigkeit des Kunden überprüft. Bei einer Ausgestaltung der Erfindung kann zur Durchführung der eigentlichen Bezahlung, beispielsweise vor der Bestätigung des angeforderten Geldbetrages, die Eingabe einer weiteren Identifizierungsnummer vorgesehen sein.

Anstelle der persönlichen oder der weiteren Identifizierungsnummer PIN können zukünftig auch andere Identifizierungsmerkmale des Kunden verwendet werden, beispielsweise sein Fingerabdruck oder seine Stimme.

Anstelle des Mobilfunkgerätes MF kann der Kunde ganz allgemein ein Endgerät mit einer drahtlosen Anbindung an ein Mobilfunksystem MS verwenden. Ein solches Endgerät kann beispielsweise ein Personal Intelligence Communicator (PIC) oder ein Personal Digital Assistant (PDA) sein. Auch solche Datenverarbeitungsgeräte mit Luftschnittstelle sind zur Durchführung des erfindungsgemäßen Verfahrens geeignet.

### Bezugszeichenliste

- MS: Mobilfunksystem
- MSC: Vermittlungszentrale (Mobile switching center)
- MF: Mobilfunkgerät
- AZ1, AZ2: Anzeigeeinrichtung
- TR1, TR2: Tastaturblock
- CK: multifunktionale Chipkarte
- PIN: persöhnliche Identifizierungsnummer
- KN: Kartennummer
- SE: Sendeeinrichtung
- EE: Empfangseinrichtung
- KZ: Kartenzentrale
- GE: Geschäftsendgerät
- V: Verbindung

## Patentansprüche

1. Verfahren zur bargeldlosen Bezahlung, bei dem
- eine multifunktionale Chipkarte (CK) in einem Endgerät (MF) mit drahtloser Anbindung an ein Mobilfunknetz (MS) kontaktiert ist,
- nach Eingabe eines persönlichen Identifizierungsmerkmals (PIN) am Endgerät (MF) dasselbe bei dem Mobilfunknetz (MS) angemeldet und in dieses eingebucht ist,
- eine Verbindung (V) vom Endgerät (MF) zu einem Geschäftsendgerät (GE) über das Mobilfunknetz (MS) aufgebaut wird,
- eine Bonitätsprüfung mit einer auf der Chipkarte (CK) gespeicherten Kartennummer (KN) durchgeführt wird, und
- ein am Geschäftsendgerät (GE) eingegebener Geldbetrag über die Verbindung (V) am Endgerät (MF) dargestellt und nach einer Bestätigung am Endgerät (MF) bei einem positiven Ergebnis der Bonitätsprüfung zur Bezahlung freigegeben wird.

2. Verfahren nach Anspruch 1, bei dem zum Aufbau der Verbindung (V) notwendige Parameter (Telefonnummer) von einer Sendeeinrichtung (SE) des Geschäftsendgerätes (GE) zu einer Empfangseinrichtung (EE) des Endgerätes (MF) übertragen werden.

3. Verfahren nach Anspruch 1 oder 2, bei dem zur Durchführung der Bonitätsprüfung am Endgerät (MF) ein weiteres Identifizierungsmerkmal eingegeben wird.

## Claims

1. Method for cashless payment, in which
- contact is made with a multifunctional chip card (CK) in a mobile telephone (MF) with wireless connection to a mobile radio network (MS),
- after a personal identification feature (PIN) has been input at the mobile telephone (MF), said mobile telephone (MF) is registered with the mobile radio network (MS) and signed on to it,
- a connection (V) from the mobile telephone (MF) to a retail outlet terminal (GE) is set up via the mobile radio network (MS),
- a credit-worthiness check is carried out with a card number (KN) stored on the chip card (CK), and
- a sum of money which has been input at the retail outlet terminal (GE) is displayed on the mobile telephone (MF) via the connection (V), and, given a positive result of the credit-worthiness check, is released for payment after confirmation at the mobile telephone (MF).

2. Method according to Claim 1, in which parameters (telephone number) which are necessary to set up the connection (V) are transmitted from a transmission device (SE) of the retail outlet terminal (GE) to a reception device (EE) of the mobile telephone (MF).

3. Method according to Claim 1 or 2, in which a further identification feature is input at the mobile telephone (MF) in order to carry out the credit-worthiness check.

## Revendications

1. Procédé pour le paiement sans espèces, dans lequel
- une carte à puce multifonctionnelle (CK) dans un terminal (MF) est mise en contact par une liaison sans fil avec un réseau de radiocommunication mobile (MS),
- après l'entrée d'un numéro d'identification personnel (PIN) sur le terminal (MF), celui-ci est annoncé sur le réseau de radiocommunication mobile (MS) et est enregistré dans ce dernier,
- on établit une liaison (V) du terminal (MF) à un terminal de commerce (GE) par l'intermédiaire du réseau de radiocommunication mobile (MS),
- on effectue un contrôle de validité avec un numéro de carte (KN) mémorisé sur la carte à puce (CK), et
- par l'intermédiaire de la liaison (V), on présente sur le terminal (MF) un montant à payer entré sur le terminal de commerce (GE) et, après confirmation sur le terminal (MF) et dans le cas d'un résultat positif au contrôle de validité,
on l'autorise pour le paiement.

2. Procédé selon la revendication 1, dans lequel on transmet des paramètres (numéro de téléphone) nécessaires à l'établissement de la liaison (V) d'un dispositif émetteur (SE) du terminal de commerce (GE) à un dispositif récepteur (EE) du terminal (MF).

3. Procédé selon la revendication 1 ou 2, dans lequel on entre une autre caractéristique d'identification sur le terminal (MF) pour la mise en oeuvre du contrôle de validité.
